# FASCICULE DE BREVET EUROPEEN

(11) **EP 3 333 067 B1**
(45) Date de publication et mention de la délivrance du brevet: **27.05.2020**
(21) Numéro de dépôt: 17201013.4
(22) Date de dépôt: 10.11.2017
(51) Int. Cl.: B64C 1/40, F16B 19/08, F16B 21/07

(54) **ENTRETOISE AUTO-PERFORANTE, PROCEDE DE POSE DE LADITE ENTRETOISE SUR UN MATELAS D'ISOLATION ET MATELAS D'ISOLATION D'AERONEF EQUIPE DE LADITE ENTRETOISE**
SELBSTLOCHENDER ABSTANDSHALTER, VERFAHREN ZUM EINBAU DES SELBSTLOCHENDEN ABSTANDSHALTERS IN EINE DÄMMMATTE UND FLUGZEUG-DÄMMMATTE MIT SELBSTLOCHENDEM ABSTANDSHALTER
SELF-PIERCING SPACER, INSTALLATION PROCESS OF THE SELF-PIERCING SPACER IN AN INSULATING MAT AND INSULATING MAT OF AN AIRCRAFT EQUIPPED WITH THE SELF-PIERCING SPACER

(30) Priorité: 22.11.2016 FR 1661331
(43) Date de publication de la demande: 13.06.2018
(73) Titulaire: AIRBUS OPERATIONS (S.A.S.), 31060 Toulouse (FR)
(72) Inventeur: MILLET, Gérard, 31820 PIBRAC (FR); NGUYEN, Christian, 31700 BLAGNAC (FR); BLIND, Serge, 31820 PIBRAC (FR); D'OUINCE, Arnaud, 31330 GRENADE (FR); MENAGE, Thomas, 29200 BREST (FR)
(74) Mandataire: Gicquel, Olivier Yves Gérard

(56) Documents cités:
- EP-A1- 2 514 334
- EP-A1- 2 530 366
- WO-A1-2012/095979
- CN-B- 104 095 330
- FR-A1- 2 891 719
- KR-A- 20120 066 876
- US-A- 1 887 466
- US-A- 3 079 658
- US-A- 4 761 860
- US-A- 5 069 586

## Description

La présente demande se rapporte à une entretoise auto-perforante pour un matelas d'isolation d'aéronef, à un procédé de pose de ladite entretoise ainsi qu'à un matelas d'isolation d'aéronef équipé de ladite entretoise.

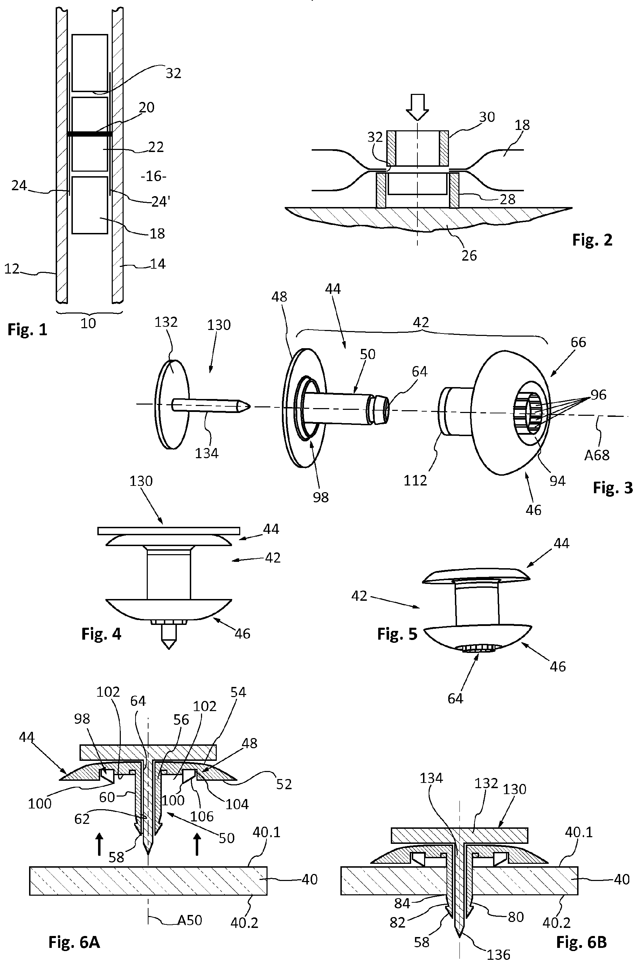

Comme illustré par la figure 2, un fuselage d'un aéronef 10 comprend une paroi extérieure 12 avec une surface extérieure en contact avec l'environnement extérieur de l'aéronef et une paroi intérieure 14 avec une surface intérieure orientée vers l'intérieur du fuselage et délimitant une cabine 16. Pour limiter les déperditions thermiques et garantir un confort aux passagers, au moins un matelas d'isolation 18 est intercalé entre les parois extérieure et intérieure 12 et 14.

Des éléments 20 traversent le matelas d'isolation 18. Pour chaque élément traversant 20, le matelas d'isolation 18 comprend une entretoise en mousse 22 pour éviter l'écrasement du matelas d'isolation 18 autour de chaque élément traversant 20. Cette entretoise en mousse 22 est reliée au matelas d'isolation 18 par deux bandes autocollantes 24, 24' positionnées sur les faces du matelas d'isolation 18.

Cette entretoise en mousse 22 est intégrée au matelas d'isolation 18 en usine. A cet effet, le matelas d'isolation 18 est positionné sur une table 26 horizontale, un premier emporte-pièce 28 étant positionné sur la table 26 et sous le matelas d'isolation 18. Un deuxième emporte-pièce 30, positionné au-dessus du matelas d'isolation 18, à l'aplomb du premier emporte-pièce 28, est utilisé pour perforer le matelas d'isolation 28 et obtenir un trou traversant 32.

Après le retrait des premier et deuxième emporte-pièces 28 et 30 et de la partie découpée du matelas, l'entretoise en mousse 22 est positionnée dans le trou traversant 32 et reliée au matelas d'isolation 18 grâce aux bandes autocollantes 24, 24'.

Après le montage du matelas d'isolation 18 sur le fuselage, si une nouvelle entretoise en mousse doit être posée, il est nécessaire de démonter plusieurs parois intérieures 14, de retirer le matelas d'isolation 18 pour pouvoir le perforer à plat sur une table avec deux emporte-pièces 28 et 30. Cette opération est longue et coûteuse.

Le document US4761860 décrit un œillet qui comprend deux éléments qui sont configurés pour être positionnés de part et d'autre d'un tissu et pour s'assembler à travers un trou réalisé dans le tissu. L'œillet peut perforer le tissu.

La présente invention vise à remédier aux inconvénients de l'art antérieur.

A cet effet, l'invention a pour objet une entretoise auto-perforante, caractérisée en ce qu'elle comprend une première partie qui comporte une première tête et un tube qui présente une première extrémité reliée à la première tête, une seconde extrémité libre et un logement traversant qui débouche d'une part au niveau de la première tête et d'autre part au niveau de la seconde extrémité et une deuxième partie qui comporte une deuxième tête et un corps qui s'étend de la deuxième tête jusqu'à une face terminale, qui comprend un conduit qui débouche d'une part au niveau de la deuxième tête et d'autre part au niveau de la face terminale et qui est configuré pour loger le tube de la première partie, l'entretoise auto-perforante étant configurée pour occuper un état démonté dans lequel les première et deuxième parties sont indépendantes et un état assemblé dans lequel les première et deuxième parties sont reliées et immobilisées l'une par rapport à l'autre, les première et deuxième parties ayant des formes coopérantes configurées pour immobiliser, dans un état emmanché et verrouillé correspondant à l'état assemblé de l'entretoise auto-perforante, les première et deuxième parties l'une par rapport à l'autre lorsque le tube de la première partie est logé dans le conduit de la deuxième partie qui comporte une première lame circulaire positionnée sur une première face de la première tête de la première partie et une deuxième lame circulaire positionnée sur la face terminale de la deuxième partie, les première et deuxième lames étant configurées et positionnées pour coopérer et être coupante lorsque l'entretoise auto-perforante est à l'état assemblé. L'entretoise auto-perforante selon l'invention peut être mise en place sur un matelas d'isolation sans avoir besoin de le déposer sur une table pour le perforer, ce qui contribue à réduire les coûts et le temps de pose des entretoises.

Selon d'autres caractéristiques, la deuxième lame a un diamètre extérieur égal au diamètre intérieur de la première lame
Selon un mode de réalisation, le tube de la première partie comprend une gorge périphérique et la deuxième partie comprend une pluralité de languettes disposées en forme de tube, configurées pour se déformer de manière élastique selon une direction radiale et qui comprennent chacune un crochet configuré pour coopérer avec la gorge périphérique de la première partie à l'état emmanché et verrouillé.

Selon une autre caractéristique, l'entretoise auto-perforante comprend un joint d'étanchéité intercalé entre les première et deuxième parties.

Selon une autre caractéristique, le joint d'étanchéité est positionné dans une gorge entourant le tube.

Selon une autre caractéristique, les première et deuxième parties sont configurées pour ménager un espacement à l'état assemblé, à l'intérieur des première et deuxième lames, entre les première et deuxième têtes.

L'invention a également pour objet un procédé de pose d'une entretoise auto-perforante sur un matelas d'isolation, caractérisé en ce qu'il comprend une première étape de perforation et de mise en place de la première partie sur le matelas d'isolation en utilisant un premier outil qui présente une tête configurée pour prendre appui contre la première partie et une tige cylindrique pointue qui s'étend à partir de la tête et qui est configurée pour se loger dans le logement traversant de la première partie et une deuxième étape de découpe du matelas d'isolation et d'assemblage des première et deuxième parties en utilisant un deuxième outil qui comporte un corps qui présente une surface d'appui configurée pour prendre appui contre la deuxième partie, le rapprochement du corps du deuxième outil et de la tête du premier outil provoquant la découpe du matelas d'isolation et le passage de l'entretoise auto-perforante à l'état assemblé.

Selon une autre caractéristique, la tige du premier outil est filetée et le corps du deuxième outil comprend un trou taraudé configuré pour se visser sur la tige filetée du premier outil, le vissage du corps du deuxième outil sur la tige du premier outil provoquant la découpe du matelas d'isolation et le passage de l'entretoise auto-perforante à l'état assemblé.

Enfin, l'invention a également pour objet un matelas d'isolation d'aéronef comprenant au moins une entretoise auto-perforante.

D'autres caractéristiques et avantages ressortiront de la description de l'invention qui va suivre, description donnée à titre d'exemple uniquement, en regard des dessins annexés sur lesquels :
- La figure 1 est une coupe d'une partie d'un fuselage d'un aéronef illustrant un matelas selon un mode de réalisation de l'art antérieur,
- La figure 2 est un schéma illustrant une étape de perforation pour la pose d'une entretoise en mousse selon l'art antérieur,
- La figure 3 est une vue en perspective d'une entretoise auto-perforante à l'état démonté qui illustre un mode de réalisation de l'invention,
- La figure 4 est une vue en perspective de l'entretoise auto-perforante visible sur la figure 3, à l'état assemblé avec un outillage de pose,
- La figure 5 est une vue en perspective de l'entretoise auto-perforante visible sur la figure 3, à l'état assemblé sans outillage de pose,
- Les figures 6A à 6G sont des coupes illustrant les différentes étapes d'un procédé de pose de l'entretoise auto-perforante visible sur la figure 3,
- La figure 7 est une vue en perspective d'un matelas d'isolation qui comporte une entretoise en mousse selon l'art antérieur et une entretoise auto-perforante selon l'invention, et
- La figure 8 est une vue en perspective d'un matelas d'isolation après le retrait d'une entretoise en mousse selon l'art antérieur et d'une entretoise auto-perforante selon l'invention.

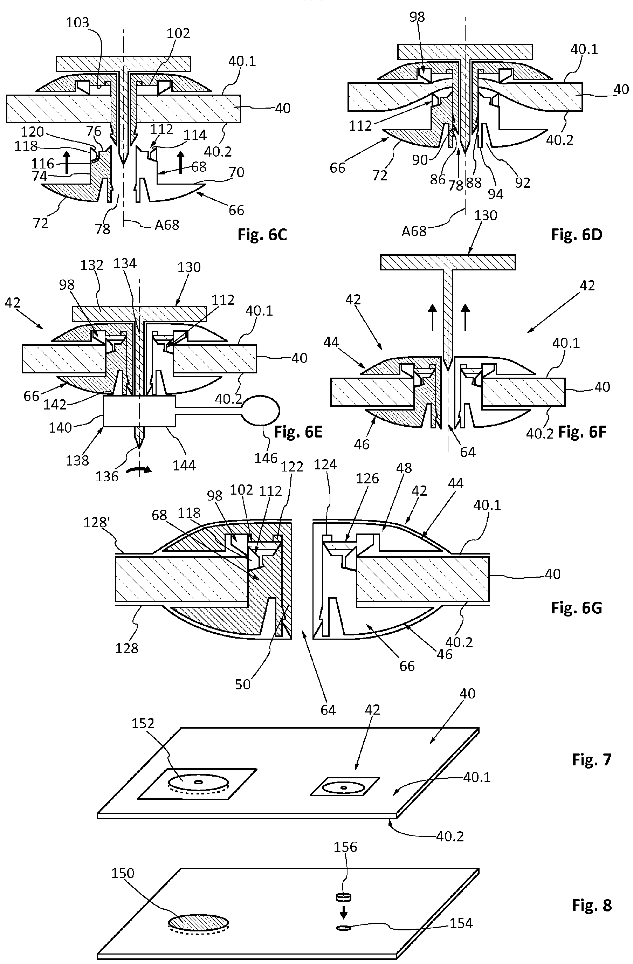

Sur les figures 6A à 6G et 7, on a représenté un matelas d'isolation 40 qui comprend au moins une entretoise auto-perforante 42. Ce matelas d'isolation 40 comprend une première face 40.1 et une seconde face 40.2.

L'entretoise auto-perforante 42 comprend une première partie 44 et une deuxième partie 46, l'entretoise auto-perforante 42 étant configurée pour occuper un état assemblé dans lequel les première et deuxième parties 44 et 46 sont reliées et immobilisées l'une par rapport à l'autre et un état démonté dans lequel les première et deuxième parties 44 et 46 sont détachées et indépendantes.

La première partie 44 comprend une première tête 48 et un tube 50 coaxial à un premier axe A50.

Selon un mode de réalisation visible notamment sur la figure 6A, la première tête 48 a une forme de disque et comprend une première face 52 plane, sensiblement perpendiculaire au premier axe A50 et une deuxième face 54 (opposée à la première face 52) légèrement bombée. Selon une configuration, la première tête 48 est centrée par rapport au premier axe A50. Selon une configuration, la première partie 44 a une forme de révolution par rapport au premier axe A50. Ainsi, le tube 50 est centré par rapport à la première tête 48.

Le tube 50 comprend une première extrémité 56 reliée à la première tête 48 et une seconde extrémité 58 libre. Le tube 50 comprend également une paroi externe 60 cylindrique coaxiale au premier axe A50 et une paroi interne 62 coaxiale au premier axe A50 qui forme un logement traversant 64 qui débouche d'une part au niveau de la deuxième face 54 de la première tête 48 et d'autre part au niveau de la seconde extrémité 58 du tube 50.

Avantageusement, la seconde extrémité 58 est pointue.

Selon un mode de réalisation visible notamment sur la figure 6C, la deuxième partie 46 comprend une deuxième tête 66 et un corps 68 coaxial à un deuxième axe A68.

La deuxième tête 66 a une forme de disque et comprend une première face 70 plane, sensiblement perpendiculaire au deuxième axe A68 et une deuxième face 72 (opposée à la première face 70) légèrement bombée. Selon une configuration, la deuxième tête 66 est centrée par rapport au deuxième axe A68. Selon une configuration, la deuxième partie 46 a une forme de révolution par rapport au deuxième axe A68. Ainsi, le corps 68 est centré par rapport à la deuxième tête 66.

Le corps 68 est approximativement cylindrique et comprend une paroi extérieure 74 coaxiale au deuxième axe A68 et qui s'étend de la deuxième tête 66 jusqu'à une face terminale 76 du corps 68 ainsi qu'un conduit 78 coaxial au deuxième axe et qui débouche d'une part au niveau de la deuxième face 72 de la deuxième tête 66 et d'autre part au niveau de la face terminale 76.

Le conduit 78 a un diamètre sensiblement égal à celui du tube 50 pour que le tube 50 de la première partie 44 puisse se loger dans le conduit 68 de la deuxième partie 46. Lorsque le tube 50 est logé dans le conduit 78, le premier axe A50 et le deuxième axe A68 sont confondus.

Selon une caractéristique de l'invention, les première et deuxième parties 44 et 46 ont des formes coopérantes configurées pour immobiliser les première et deuxième parties 44 et 46 l'une par rapport à l'autre lorsque le tube 50 de la première partie 44 est logé dans le conduit 78 de la deuxième partie 46.

Ainsi, les première et deuxième parties 44 et 46 sont configurées pour occuper un état démonté dans lequel le tube 50 n'est pas logé et/ou n'est pas immobilisé dans le conduit 78 et un état emmanché et verrouillé qui correspond à l'état assemblé de l'entretoise auto-perforante 42 dans lequel le tube 50 est logé dans le conduit 78 et immobilisé par rapport au conduit 78.

Selon un mode de réalisation visible notamment sur la figure 6B, le tube 50 comprend une gorge périphérique 80 positionnée à proximité de la seconde extrémité 58. Cette gorge périphérique 80 comprend un premier flanc 82 perpendiculaire au premier axe A50 et un deuxième flanc 84 incliné par rapport au premier axe A50.

Selon un mode de réalisation visible sur la figure 6D, le conduit 78 comprend au moins un crochet 86 configuré pour coopérer avec la gorge périphérique 80 à l'état emmanché et verrouillé. Ainsi, le crochet 86 comprend un premier flanc 88 perpendiculaire au deuxième axe A68 configuré pour prendre appui contre le premier flanc 82 de la gorge périphérique 80 et un deuxième flanc 90 incliné qui coopère avec le deuxième flanc 84 de la gorge périphérique 80 à l'état emmanché et verrouillé.

Selon une autre caractéristique, la deuxième partie 46 comprend un évidement 92 autour du conduit 78 qui débouche au niveau de la deuxième face 72 de la deuxième tête 66 et qui délimite, avec le conduit 78, un tube 94 de faible épaisseur. Comme illustré sur la figure 3, ce tube 94 comprend une pluralité de fentes, parallèles au deuxième axe A68 et régulièrement réparties sur la périphérie du tube 94. Entre deux fentes consécutives, le tube 94 forme une languette 96 configurée pour se déformer de manière élastique selon une direction radiale (perpendiculaire au deuxième axe A68). Chaque languette 96 comprend un crochet 86. En l'absence de déformation des languettes 96, les crochets 86 des languettes 96 sont logés dans la gorge périphérique 80 et le tube 50 est à l'état emmanché et verrouillé. En insérant un outil entre les languettes 96 et le tube 50, il est possible de déformer les languettes 96 radialement en les écartant du tube 50 pour déloger les crochets 86 de la gorge périphérique 80 et détacher ainsi les première et deuxième parties 44 et 46.

L'entretoise auto-perforante 42 comprend un système de coupe configuré pour découper le matelas d'isolation 40 lorsque l'entretoise auto-perforante 42 passe de l'état démonté à l'état assemblé. Ainsi, le système de coupe est coupant (fonctionnel) lorsque l'entretoise auto-perforante 42 passe de l'état démonté à l'état assemblé. Le système de coupe n'est plus fonctionnel lorsque l'entretoise auto-perforante 42 est à l'état assemblé.

A cet effet, la première partie 44 comprend une première lame 98 circulaire positionnée sur la première face 52 de la première tête 48 et qui présente une arête tranchante circulaire 100 coaxiale au premier axe A50 et orientée vers la deuxième partie 46.

La première lame 98 comprend un chant intérieur 102, un chant extérieur 104 et une extrémité 106 (orientée vers la deuxième partie 46) en biseau, le chant intérieur 102 ayant une hauteur supérieure à celle du chant extérieur 104. L'arête entre l'extrémité 106 et le chant intérieur 102 forme l'arête tranchante circulaire 100.

Selon une configuration, la première face 44 comprend un logement 102 cylindrique, coaxial au premier axe A50, avec un fond 103 plat perpendiculaire au premier axe A50. La première lame 98 est positionnée dans le logement 102, l'arête tranchante circulaire 100 étant légèrement en saillie à l'extérieur du logement 102.

En complément de la première lame 98, la deuxième partie 46 comprend une deuxième lame 112 circulaire positionnée sur la face terminale 76 du corps 68 et qui présente une arête tranchante circulaire 114 coaxiale au deuxième axe A68 et orientée vers la première partie 44.

La deuxième lame 112 comprend un chant intérieur 116, un chant extérieur 118 et une extrémité 120 (orientée vers la première partie 44) en biseau, le chant extérieur 118 ayant une hauteur supérieure à celle du chant intérieur 116. L'arête entre l'extrémité 120 et le chant extérieur 118 forme l'arête tranchante circulaire 114.

La deuxième lame 112 a un diamètre extérieur égal au diamètre intérieur de la première lame 98.

Ainsi, à l'état assemblé, le chant intérieur 102 de la première lame 98 de la première partie 44 et le chant extérieur 118 de la deuxième lame 112 sont chevauchants, comme illustré en détails sur la figure 6G.

Selon un mode de réalisation, l'arête tranchante circulaire 100 et/ou 114 est continue et s'étend dans un plan sensiblement perpendiculaire aux premier et/ou deuxième axes A50, A68. Selon un autre mode de réalisation, l'arête tranchante circulaire 100 et/ou 114 n'est pas continue mais a un profil en dent de scie.

Selon une autre caractéristique, l'entretoise auto-perforante 42 comprend un joint d'étanchéité 122 intercalé entre les première et deuxième parties 44, 46, comme illustré sur la figure 6G.

Le joint d'étanchéité 122 est positionné dans une gorge entourant le tube 50 et prévue sur le fond 103 du logement 102. En complément, le corps 68 comprend une nervure 124, dans le prolongement du conduit 78, en saillie par rapport à la face terminale 76 et configurée pour comprimer le joint d'étanchéité 122 lorsque l'entretoise auto-perforante 42 est à l'état assemblé.

Selon une autre caractéristique, les première et deuxième parties 44, 46 sont configurées pour ménager un espacement à l'état assemblé, à l'intérieur des première et deuxième lames 98, 112, entre les têtes 48 et 66, pour stocker la partie découpée 126 du matelas d'isolation 40 lorsque l'entretoise auto-perforante 42 est à l'état assemblé.

Après la pose de l'entretoise auto-perforante 42, le matelas d'isolation 40 comprend pour chaque face 40.1 et 40.2 une bande autocollante 128, 128' qui recouvre la tête 48, 66 de l'entretoise auto-perforante 42 et qui s'étend au-delà de ladite tête 48, 66 sur la face 40.1, 40.2 du matelas d'isolation 40.

Le procédé de pose de l'entretoise auto-perforante est décrit au regard des figures 6A à 6G. Lors d'une première étape, la première partie 44 est mise en place sur le matelas d'isolation en utilisant un premier outil de perforation 130 d'un outillage de pose. Ce premier outil de perforation 130 présente une tête 132 en forme de disque et une tige 134 cylindrique pointue qui s'étend à partir du centre de la tête 132, perpendiculairement à ladite tête 132. La tige 134 cylindrique pointue a un diamètre sensiblement égal à celui du logement traversant 64 du tube 50 de la première partie 44 et une longueur supérieure à celle du logement traversant 64 pour venir en saillie par rapport à l'extrémité 68 du tube 50 lorsque la tige 134 cylindrique pointue est introduite dans le logement traversant 64 de la première partie 44 et que la tête 48 de la première partie 44 est en appui contre la tête 132 de l'outil de perforation 130.

Comme illustré sur la figure 6A, l'outil de perforation 130 est introduit dans le logement traversant 64 de la première partie 44.

L'extrémité pointue 136 de l'outil de perforation 130 permet de perforer le matelas d'isolation 40 à l'endroit désiré. La tête 132 de l'outil de perforation 130 permet d'exercer l'effort nécessaire à la perforation.

La forme pointue de la seconde extrémité 58 du tube 50 favorise le passage du tube 50 à travers le matelas d'isolation 40, comme illustré par la figure 6B.

Une fois montée, la première tête 48 de la première partie 44 est plaquée contre la première face 40.1 du matelas d'isolation 40.

Le procédé de pose comprend une autre étape de positionnement de la deuxième partie 46 par rapport à la première partie 44, comme illustré par les figures 6C et 6D. Lors de cette étape, le tube 50 de la première partie 44 est introduit dans le conduit 78 du corps 68 jusqu'à ce que les première et deuxième lames 98, 112 soient en contact avec le matelas d'isolation 40.

En suivant, le matelas d'isolation 40 est découpé et les première et deuxième parties 44 et 46 sont assemblées en utilisant un deuxième outil de pression 138 de l'outillage de pose, visible sur la figure 6E. Cet outil de pression 138 comprend un corps 140 qui présente une surface d'appui 142 configurée pour prendre appui contre la tête 66 de la deuxième partie 44. Pour provoquer la découpe du matelas d'isolation 40 et le passage de l'entretoise auto-perforante à l'état assemblé, le corps 140 de l'outil de pression est rapproché de la tête 132 du premier outil de perforation.

Pour favoriser cette action, la tige 134 du premier outil de perforation 130 est filetée et le corps 140 du deuxième outil de pression 138 comprend un trou taraudé 144 configuré pour se visser sur la tige 134 filetée de l'outil de perforation 130. De préférence, le trou taraudé 144 est centré par rapport à la surface d'appui 142 et s'étend selon une direction perpendiculaire à la surface d'appui 142.

Avantageusement, le deuxième outil de pression 138 comprend une manette 146 reliée au corps 140 et qui s'étend radialement par rapport au trou taraudé 144 pour visser l'outil de pression 138 sur la tige 134 filetée de l'outil de perforation 130.

En vissant le deuxième outil de pression 138, le corps 140 du deuxième outil de pression 138 se rapproche de la tête 132 du premier outil de perforation 130. Cette action provoque le rapprochement des têtes 48 et 66 des première et deuxième parties 44 et 46 et la découpe du matelas d'isolation 40 par les première et deuxième lames 98 et 112. L'action de vissage est arrêtée lorsque les crochets 86 des languettes 96 de la deuxième partie 46 sont logés dans la gorge périphérique 80 de la première partie 44 et que l'entretoise auto-perforante 42 est à l'état assemblé.

Les deux outils 130 et 138 sont retirés comme illustré sur la figure 6F et les bandes autocollantes 138 et 128' sont rapportées sur les faces 40.1 et 40.2 du matelas d'isolation 40, comme illustré sur la figure 6G.

Le logement traversant 64 de l'entretoise auto-perforante peut être utilisé pour loger un élément, comme une fixation par exemple, qui traverse le matelas d'isolation 40. L'entretoise auto-perforante 42 permet d'éviter que le matelas d'isolation 40 soit écrasé autour du logement traversant 64.

L'entretoise auto-perforante 42 peut être mise en place sur un matelas d'isolation 40 sans avoir besoin de le disposer à plat sur une table ce qui contribue à réduire les coûts et le temps de pose des entretoises.

Selon un autre avantage illustré par la figure 8, lorsqu'un trou 150 occupé par une entretoise 152 en mousse est abandonné, la totalité de la surface du trou 150 ne peut plus être utilisée. Dans le cas d'une entretoise auto-perforante 42 selon l'invention, lorsque le trou 154 est abandonné, l'entretoise auto-perforante 42 peut être démontée et remplacée par un disque en mousse 156 dont la superficie est nettement inférieure à celle du trou 150

## Revendications

1. Entretoise auto-perforante (42) comprenant:
- une première partie (44) qui comporte une première tête (48) et un tube (50) qui présente une première extrémité (56) reliée à la première tête (48), une seconde extrémité (58) libre et un logement traversant (64) qui débouche d'une part au niveau de la première tête (48) et d'autre part au niveau de la seconde extrémité (58), et
- une deuxième partie (46) qui comporte une deuxième tête (66) et un corps (68) qui s'étend de la deuxième tête (66) jusqu'à une face terminale (76), qui comprend un conduit (78) qui débouche d'une part au niveau de la deuxième tête (66) et d'autre part au niveau de la face terminale (76) et qui est configuré pour loger le tube (50) de la première partie (44),
- l'entretoise auto-perforante (42) étant configurée pour occuper un état démonté dans lequel les première et deuxième parties (44, 46) sont indépendantes et un état assemblé dans lequel les première et deuxième parties (44, 46) sont reliées et immobilisées l'une par rapport à l'autre, les première et deuxième parties (44, 46) ayant des formes coopérantes configurées pour immobiliser, dans un état emmanché et verrouillé correspondant à l'état assemblé de l'entretoise auto-perforante, les première et deuxième parties (44, 46) l'une par rapport à l'autre lorsque le tube (50) de la première partie (44) est logé dans le conduit (78) de la deuxième partie (46),
**caractérisée en ce que** l'entretoise auto-perforante (42) comprend
- un système de coupe qui comporte une première lame (98) circulaire positionnée sur une première face (52) de la première tête (48) de la première partie (44) et une deuxième lame (112) circulaire positionnée sur la face terminale (76) de la deuxième partie (46), les première et deuxième lames (98, 112) étant configurées et positionnées pour coopérer et être coupante lorsque l'entretoise auto-perforante (42) est à l'état assemblé.

2. Entretoise auto-perforante selon la revendication 1, **caractérisée en ce que** la deuxième lame (112) a un diamètre extérieur égal au diamètre intérieur de la première lame (98).

3. Entretoise auto-perforante selon la revendication 1 ou 2, **caractérisé en ce que** le tube (50) de la première partie (44) comprend une gorge périphérique (80) et **en ce que** la deuxième partie (46) comprend une pluralité de languettes (96) disposées en forme de tube, configurées pour se déformer de manière élastique selon une direction radiale et qui comprennent chacune un crochet (86) configuré pour coopérer avec la gorge périphérique (80) de la première partie (44) à l'état emmanché et verrouillé.

4. Entretoise auto-perforante selon l'une des revendications précédentes, **caractérisée en ce qu'**elle comprend un joint d'étanchéité (122) intercalé entre les première et deuxième parties (44, 46).

5. Entretoise auto-perforante selon la revendication 4, **caractérisée en ce que** le joint d'étanchéité (122) est positionné dans une gorge entourant le tube (50).

6. Entretoise auto-perforante l'une des revendications précédentes, **caractérisée en ce que** les première et deuxième parties (44, 46) sont configurées pour ménager un espacement à l'état assemblé, à l'intérieur des première et deuxième lames (98, 112), entre les première et deuxième têtes (48, 66).

7. Procédé de pose d'une entretoise auto-perforante selon l'une des revendications précédentes sur un matelas d'isolation (40), **caractérisé en ce que** le procédé comprend une première étape de perforation et de mise en place de la première partie (44) sur le matelas d'isolation (40) en utilisant un premier outil (130) qui présente une tête (132) configurée pour prendre appui contre la première partie (44) ainsi qu'une tige (134) cylindrique pointue qui s'étend à partir de la tête (132) et qui est configurée pour se loger dans le logement traversant (64) de la première partie (44) et une deuxième étape de découpe du matelas d'isolation (40) et d'assemblage des première et deuxième parties (44, 46) en utilisant un deuxième outil (138) qui comporte un corps (140) qui présente une surface d'appui (142) configurée pour prendre appui contre la deuxième partie (46), le rapprochement du corps (140) du deuxième outil (138) et de la tête (132) du premier outil (130) provoquant la découpe du matelas d'isolation (40) et le passage de l'entretoise auto-perforante à l'état assemblé.

8. Procédé de pose selon la revendication précédente, **caractérisé en ce que** la tige (134) du premier outil (130) est filetée et **en ce que** le corps (140) du deuxième outil (138) comprend un trou taraudé (144) configuré pour se visser sur la tige (134) filetée du premier outil (130), le vissage du corps (140) du deuxième outil (138) sur la tige (134) du premier outil (130) provoquant la découpe du matelas d'isolation (40) et le passage de l'entretoise auto-perforante à l'état assemblé.

9. Matelas d'isolation d'aéronef comprenant au moins une entretoise auto-perforante selon l'une des revendications 1 à 6.

## Patentansprüche

1. Selbstlochender Abstandshalter (42), der Folgendes beinhaltet:
- einen ersten Teil (44), umfassend einen ersten Kopf (48) und ein Rohr (50), welches ein mit dem ersten Kopf (48) verbundenes erstes Ende (56), ein freies zweites Ende (58) und eine Durchgangsaufnahme (64), die einerseits an dem ersten Kopf (48) und andererseits an dem zweiten Ende (58) mündet, aufweist, und
- einen zweiten Teil (46), umfassend einen zweiten Kopf (66) und einen Körper (68), der sich von dem zweiten Kopf (66) bis zu einer Endfläche (76) erstreckt und einen Kanal (78) beinhaltet, der einerseits an dem zweiten Kopf (66) und andererseits an der der Endfläche (76) mündet und dazu konfiguriert ist, das Rohr (50) des ersten Teils (44) aufzunehmen,
- wobei der selbstlochende Abstandshalter (42) dazu konfiguriert ist, einen demontierten Zustand, in dem der erste und der zweite Teil (44, 46) unabhängig sind, und einen montierten Zustand, in dem der erste und der zweite Teil (44, 46) miteinander verbunden und in Bezug aufeinander blockiert sind, einzunehmen, wobei der erste und der zweite Teil (44, 46) zusammenwirkende Formen aufweisen, die dazu konfiguriert sind, den ersten und den zweiten Teil (44, 46) in einem zusammengesteckten und verriegelten Zustand, der dem montierten Zustand des selbstlochenden Abstandshalters entspricht, in Bezug aufeinander zu blockieren, wenn das Rohr (50) des ersten Teils (44) in dem Kanal (78) des zweiten Teils (46) aufgenommen ist,
**dadurch gekennzeichnet, dass** der selbstlochende Abstandshalter (42) Folgendes beinhaltet:
- ein Schneidsystem, das eine erste kreisförmige Schneide (98), die an einer ersten Fläche (52) des ersten Kopfes (48) des ersten Teils (44) positioniert ist, und eine zweite kreisförmige Schneide (112), die an der Endfläche (76) des zweiten Teils (46) positioniert ist, umfasst, wobei die erste und die zweite Schneide (98, 112) dazu konfiguriert und positioniert sind, zusammenzuwirken und schneidfähig zu sein, wenn sich der selbstlochende Abstandshalter (42) in dem montierten Zustand befindet.

2. Selbstlochender Abstandshalter nach Anspruch 1, **dadurch gekennzeichnet, dass** die zweite Schneide (112) einen Außendurchmesser aufweist, der gleich dem Innendurchmesser der ersten Schneide (98) ist.

3. Selbstlochender Abstandshalter nach Anspruch 1 oder 2, **dadurch gekennzeichnet, dass** das Rohr (50) des ersten Teils (44) eine umlaufende Nut (80) beinhaltet und dass der zweite Teil (46) eine Vielzahl von Laschen (96) beinhaltet, die rohrförmig angeordnet sind und dazu konfiguriert sind, sich elastisch in einer radialen Richtung zu verformen, und die jeweils einen Haken (86) beinhalten, der dazu konfiguriert ist, im zusammengesteckten und verriegelten Zustand mit der umlaufenden Nut (80) des ersten Teils (44) zusammenzuwirken.

4. Selbstlochender Abstandshalter nach einem der vorhergehenden Ansprüche, **dadurch gekennzeichnet, dass** er eine Dichtung (122) beinhaltet, die zwischen dem ersten und dem zweiten Teil (44, 46) eingebracht ist.

5. Selbstlochender Abstandshalter nach Anspruch 4, **dadurch gekennzeichnet, dass** die Dichtung (122) in einer Nut, die das Rohr (50) umgibt, positioniert ist.

6. Selbstlochender Abstandshalter nach einem der vorhergehenden Ansprüche, **dadurch gekennzeichnet, dass** der erste und der zweite Teil (44, 46) dazu konfiguriert sind, im montierten Zustand im Inneren der ersten und der zweiten Schneide (98, 112) zwischen dem ersten und dem zweiten Kopf (48, 66) einen Zwischenraum zu bilden.

7. Verfahren zum Einbau eines selbstlochenden Abstandshalters nach einem der vorhergehenden Ansprüche in eine Dämmmatte (40), **dadurch gekennzeichnet, dass** das Verfahren Folgendes beinhaltet: einen ersten Schritt des Perforierens und des Einsetzens des ersten Teils (44) in die Dämmmatte (40) unter Verwendung eines ersten Werkzeugs (130), das einen Kopf (132), der dazu konfiguriert ist, sich an dem ersten Teil (44) abzustützen, sowie eine spitze zylindrische Stange (134), die sich von dem Kopf (132) erstreckt und dazu konfiguriert ist, in der Durchgangsaufnahme (64) des ersten Teils (44) aufgenommen zu werden, aufweist, und einen zweiten Schritt des Zerschneidens der Dämmmatte (40) und des Montierens des ersten und des zweiten Teils (44, 46) unter Verwendung eines zweiten Werkzeugs (138), das einen Körper (140) umfasst, der eine Abstützoberfläche (142) aufweist, die dazu konfiguriert ist, sich an dem zweiten Teil (46) abzustützen, wobei das Annähern des Körpers (140) des zweiten Werkzeugs (138) und des Kopfes (132) des ersten Werkzeugs (130) das Zerschneiden der Dämmmatte (40) und das Übergehen des selbstlochenden Abstandshalters in den montierten Zustand bewirkt.

8. Einbauverfahren nach dem vorhergehenden Anspruch, **dadurch gekennzeichnet, dass** die Stange (134) des ersten Werkzeugs (130) mit einem Gewinde versehen ist und dass der Körper (140) des zweiten Werkzeugs (138) eine Gewindebohrung (144) beinhaltet, die dazu konfiguriert ist, sich auf die Gewindestange (134) des ersten Werkzeugs (130) zu schrauben, wobei das Aufschrauben des Körpers (140) des zweiten Werkzeugs (138) auf die Stange (134) des ersten Werkzeugs (130) das Zerschneiden der Dämmmatte (40) und das Übergehen des selbstlochenden Abstandshalters in den montierten Zustand bewirkt.

9. Flugzeug-Dämmmatte, die mindestens einen selbstlochenden Abstandshalter nach einem der Ansprüche 1 bis 6 beinhaltet.

## Claims

1. Self-perforating spacer (42) comprising:
- a first part (44), which has a first head (48) and a tube (50) having a first end (56) joined to the first head (48), a second, free end (58), and a through-housing (64) that opens out at the first head (48) at one end and at the second end (58) at the other end, and
- a second part (46), which has a second head (66) and a body (68) extending from the second head (66) to a terminal face (76), which comprises a duct (78) that opens out at the second head (66) at one end and at the terminal face (76) at the other end and is configured to accommodate the tube (50) of the first part (44),
- the self-perforating spacer (42) being configured to take up a dismantled state, in which the first and second parts (44, 46) are independent, and an assembled state, in which the first and second parts (44, 46) are joined together and immobilized with respect to one another, the first and second parts (44, 46) having cooperating shapes configured, in an engaged and locked state corresponding to the assembled state of the self-perforating spacer, to immobilize the first and second parts (44, 46) with respect to one another when the tube (50) of the first part (44) is accommodated in the duct (78) of the second part (46),
**characterized in that** the self-perforating spacer (42) comprises
- a cutting system, which has a first circular blade (98) positioned on a first face (52) of the first head (48) of the first part (44), and a second circular blade (112) positioned on the terminal face (76) of the second part (46), the first and second blades (98, 112) being configured and positioned to cooperate and to intersect when the self-perforating spacer (42) is in the assembled state.

2. Self-perforating spacer according to Claim 1, **characterized in that** the second blade (112) has an outside diameter equal to the inside diameter of the first blade (98).

3. Self-perforating spacer according to Claim 1 or 2, **characterized in that** the tube (50) of the first part (44) comprises a peripheral groove (80), and **in that** the second part (46) comprises a plurality of tabs (96) that are disposed in a tube shape, are configured to deform elastically in a radial direction, and each comprise a hook (86) configured to cooperate with the peripheral groove (80) of the first part (44) in the engaged and locked state.

4. Self-perforating spacer according to one of the preceding claims, **characterized in that** it comprises a seal (122) interposed between the first and second parts (44, 46).

5. Self-perforating spacer according to Claim 4, **characterized in that** the seal (122) is positioned in a groove surrounding the tube (50).

6. Self-perforating spacer according to one of the preceding claims, **characterized in that** the first and second parts (44, 46) are configured to form a spacing in the assembled state, on the inside of the first and second blades (98, 112), between the first and second heads (48, 66).

7. Method for setting a self-perforating spacer according to one of the preceding claims on an insulation blanket (40), **characterized in that** the method comprises a first step of perforating and fitting the first part (44) on the insulation blanket (40) using a first tool (130), which has a head (132) configured to bear against the first part (44) and a pointed cylindrical shank (134), which extends from the head (132) and is configured to be accommodated in the through-housing (64) of the first part (44), and a second step of cutting the insulating blanket (40) and assembling the first and second parts (44, 46) using a second tool (138), which has a body (140) that has a bearing surface (142) configured to bear against the second part (46), the moving together of the body (140) of the second tool (138) and the head (132) of the first tool (130) causing the insulation blanket (40) to be cut and the self-perforating spacer to pass into the assembled state.

8. Setting method according to the preceding claim, **characterized in that** the shank (134) of the first tool (130) is threaded, and **in that** the body (140) of the second tool (138) comprises a tapped hole (144) configured to be screwed onto the threaded shank (134) of the first tool (130), the screwing of the body (140) of the second tool (138) onto the shank (134) of the first tool (130) causing the insulation blanket (40) to be cut and the self-perforating spacer to pass into the assembled state.

9. Aircraft insulation blanket comprising at least one self-perforating spacer according to one of Claims 1 to 6.
